(19) Europäisches Patentamt

European Patent Office

Office européen des brevets

(11) Publication number: **0 232 285 B1**

(12) # EUROPEAN PATENT SPECIFICATION

(45) Date of publication of patent specification :
27.02.91 Bulletin 91/09

(51) Int. Cl.⁵ : **F16K 17/36**

(21) Application number : **86903623.6**

(22) Date of filing : **03.06.86**

(86) International application number :
**PCT/NO86/00038**

(87) International publication number :
**WO 86/07427 18.12.86 Gazette 86/27**

(54) **A VALVE ACTUATOR SYSTEM FOR CONTROLLING OF VALVES.**

(30) Priority : **03.06.85 NO 852224**

(43) Date of publication of application :
**19.08.87 Bulletin 87/34**

(45) Publication of the grant of the patent :
**27.02.91 Bulletin 91/09**

(84) Designated Contracting States :
**DE FR GB IT NL SE**

(56) References cited :
**NO-B- 130 653**
**US-A- 3 413 992**
**US-A- 3 548 848**
**US-A- 3 739 796**
**US-A-41 112 21**

(73) Proprietor : **A/S RAUFOSS
AMMUNISJONSFABRIKKER
P.O. Box 2
N-2831 Raufoss (NO)**

(72) Inventor : **NARUM, Henning
N-2843 Eina (NO)**

(74) Representative : **Jenkins, Peter David et al
PAGE, WHITE & FARRER 54 Doughty Street
London WC1N 2LS (GB)**

## Description

The present invention relates to a valve actuator system for controlling a valve and in particular to such a system for actuation of a valve, above or under water

It is known to control valves hydraulically, pneumatically and mechanically. Such control is used for instance by offshore hydrocarbon production. A disadvantage of the control is that all the necessary energy for the movement of the shut-off members of the valves must be supplied partly over long distances, from a fixed or floating installation.

Another disadvantage, in particular of hydraulic systems, is that these systems are very complicated and expensive, and in connection with emergency shut-off valves which are rarely used the hydraulic systems also are little economical, with much maintenance work without daily use of the systems

A known control valve is disclosed in US-A-3739796. That document discloses a system for detecting and arresting an explosion in a pipeline. The device comprises a hollow steel plug contained in a housing, a steel insert and compressible wafer at one end of the plug, and a detonator supported against the wafer. The steel plug is held stationary by a shear pin which breaks when the detonator is fired to allow the plug to be forced along the housing and to block the pipeline.

In accordance with the present invention it has been found that gas generators can be used to operate valve actuators for emergency shut-off valves and other suitable valves.

The present invention provides a valve actuator for controlling a valve by use of a gas for moving the valve, said gas being produced by combustion of a charge which can be initiated at a desired point of time, characterized in that the valve to be controlled is connected to a piston in a piston housing, and passages for the gas connect the respective ends of a piston chamber with at least one gas generator, each gas generator having a charge chamber which prior to actuation is closed and shielded against the influence of pressure and temperature by means of a shiftable valve member which is locked in its closed position by a rupture disc, which abuts against an extension of the valve member, said disc being situated in a housing and retained against movement, and whereby at least one discharge passage for discharge of gas to the piston housing is situated outside of the housing.

Preferably a freely movable sub piston is provided coaxially with one end of the piston in order to cause sealing against an outlet at one end of the piston chamber, and the sub piston comprises at least one axial protrusion for maintaining a spacing between the piston and the sub piston, for admission of gas.

More preferably the passages are coupled to a dead volume through rupture discs.

Still more preferably at least one of the passages is coupled to a gas discharge duct provided with a labyrinth seal.

Optionally, thermal insulation covers a surface of the valve member facing away from the charge chamber.

Here, gas generator means a generator which by combustion of gunpowder inside of the generator develops a gas, which because of its pressure is able to shift a movable member in the valve actuator, such as a piston.

Such gas generators may be fired by use of electric current. This may take place by use of a hydro acoustic system for control of accumulators for supply of current, and coded pulses through the water may be used. Thereby, the firing may take place without any direct connection between the gas generators and the place where the control is carried out, and uniquely coded pulses may be used for different operations and different gas generators, so that a completely selective remote control is achieved without any other connection than the water itself.

The firing of the gas generators may, as an alternative to electric firing, be carried out by mechanical detonators, chemical systems or by means of laser technique through optical fibre cables.

The preferred embodiments of the present invention will now be described by way of example only with reference to the accompanying drawings in which :

Figs. 1, 2, 3 and 4 show principles and the functioning of the valve actuator.

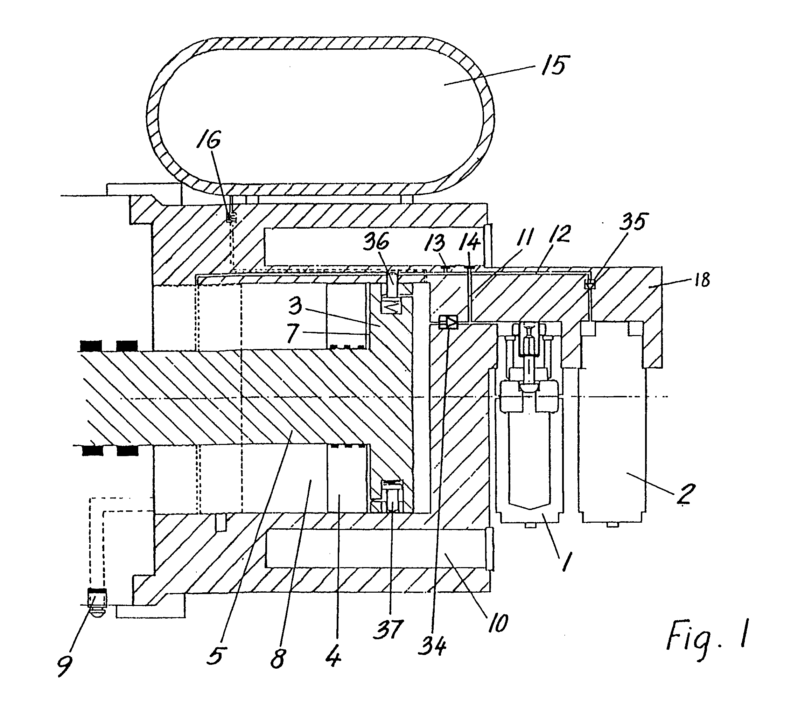

Fig 1 shows a valve actuator based on the use of gas generators which generate gunpowder gas.

In Fig. 1 are only shown gas generators 1, 2 for the closing and opening function. It will be understood implicitly that there may be several gas generators for repeated opening and closing functions. The broken lines show the valve in a closed position.

The actuator is equipped with two pistons, a main piston 3 and a sub piston 4. The sub piston runs freely on the piston rod 5.

Fig. 2 shows the geometry of the sub piston seen from above The ribs 6 form a cavity 7 between the sub piston 4 and the main piston 3. The piston rod 5 is connected to the valve itself (not shown). The purpose of two pistons will be explained below.

Behind the two pistons in the cylinder chamber 8 of the actuator has been filled a liquid which will control the movement of the actuator during the closing function. By actuation the liquid is discharged out to the atmosphere through a shear disc 9 or to a separate tank (not shown) by under water use.

The shear disc 9 may also be replaced by a usual check valve.

Further, the actuator is provided with a dead volume 10 for protection against excessive pressure. The dead volume is connected to the passages 11, 12 from the gas generators 1, 2 through safety shear discs 13, 14.

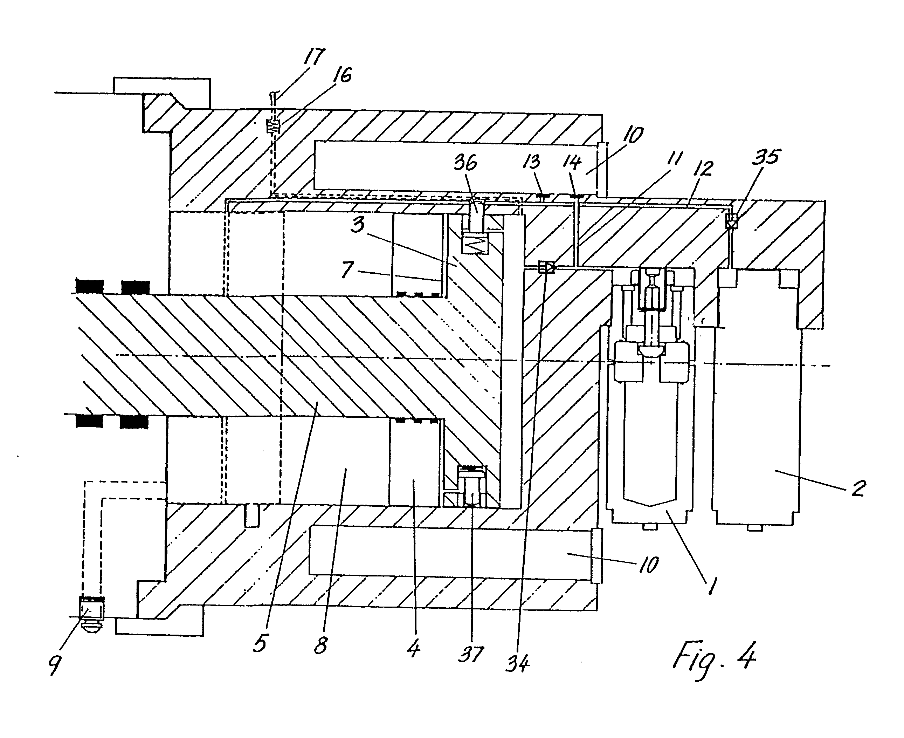

When the valve actuator is used under water it may be necessary to vent the residual pressure in the cylinder of the actuator when used several times or once. In Fig. 1 this has been shown in that an expansion tank 15 has been associated with the cylinder chamber 8 of the actuator through a labyrinth passage 16. In Fig. 4 is shown an alternative where the venting takes place by means of a tube 17 to the surface through the same labyrinth passage. The purpose of the labyrinth passage is to prevent that any substantial pressure is lost during the operation.

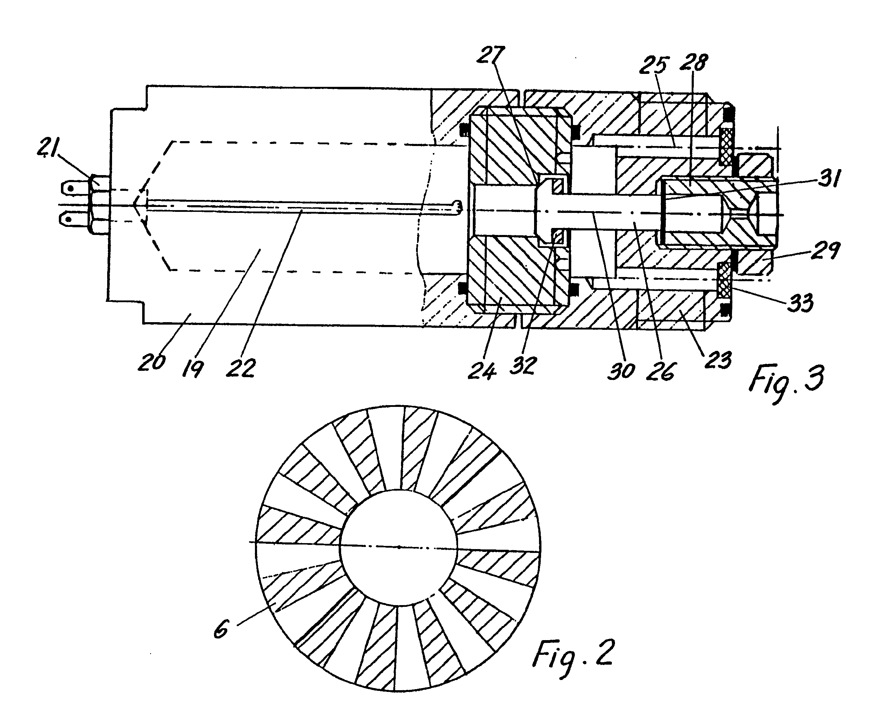

The gas generators 1, 2 have been screwed directly into the cylinder wall 18 of the actuator. The gas generators may also be connected with the cylinder wall 18 of the actuator through tubes. This alternative has not been shown. The gas generators 1, 2 have been shown detailed in Fig. 3.

The functioning of the gas generators is explained in the following.

The purpose of the system described below is to protect each gas generator against the others when several gas generators have been assembled in a system. It is necessary to protect the powder charge 19 against pressure and temperature.

The housing 20 having a passage 21 for the electric cords (not shown) and an igniter device 22 is connected to the discharge portion 23 through the coupling part 24. A valve 26 is also provided here, having a valve seat 27 in the coupling part 24. The valve 26 is mounted in the system by means of a second coupling part 28 having a pre-tensioning nut 29. The valve stem 30 is connected to the coupling part 28 through a burst disc 31. Around the valve stem 30 and adjacent the valve seat 27 is provided thermal insulation 32

During the assembly the pre-tension nut 29 is tightened, so that the valve 26 is fastened to the valve seat 27. This will make a safe barrier against influence of pressure on the powder charge 19. The thermal insulation 32 protects against the influence of the temperature

By actuation of the powder charge a current is supplied to resistance cords 22 which ignite the powder charge 19. The built up pressure causes that the valve 26 moves backwardly and bursts the disc 31. The gas will flow out into the passages 25 through the filters 33, to the cylinder chamber 8 of the valve actuator through a check valve 34, 35

The system comprising a valve 26 and a burst disc 31 has been chosen in order to avoid that parts of traditional burst discs shall be able to destroy piston surfaces in the actuator and clog passages etc

By actuation of a gas generator 1, 2 as explained above the locking mechanism 36 will open and the main piston 3 and the sub piston 4 of the actuator will move to the position shown with broken lines in Figs 1 and 4. If it is desired to lock the actuator in the closed position a locking mechanism 37 as shown in Fig. 1 and 4 can be used.

The pressure in the liquid behind the pistons will cause that the shear disc 9 bursts and the liquid will then flow out as explained earlier and will control the valve actuator movement hydraulically.

If the pistons 3, 4 in the valve actuator from some reason are not able to be moved the pressure ahead of the main piston will build up, so that the safety shear disc 13, 14 will be ruptured and the liquid is conducted into the dead volume 10. Thus, this is a safety function in the system. By multi-operations each gas generator will have its own passage to the dead volume, so that several attempts of operating the actuator may be made.

By opening (reversing) of the actuator the gas generator 2 will be actuated and the gas will flow in between the main piston 3 and the sub piston 4 in the broken line position.

The locking mechanism 37 will open up and the main piston 3 will move towards open position. The opening velocity is less critical than the closing velocity for pure emergency shut-off valves. Therefore the opening velocity is controlled by the combustion time of the gas generator.

The purpose of using a two-piston solution is that it would be adverse to conduct the hot gas into a cavity filled with liquid.

By multi-operations new liquid must be pumped in behind the sub piston 4, so that it will move up towards the main piston 3 as shown in closed position in Figs. 1 and 4.

## Claims

1. A valve actuator for controlling a valve by use of a gas for moving the valve, said as being produced by combustion of a charge (19) which can be initiated at a desired point of time, characterized in that the valve to be controlled is connected to a piston (3) in a piston housing (18), and passages (12) for the gas connect the respective ends of a piston chamber (8) with at least one gas generator (1, 2), each gas generator (1, 2) having a charge chamber which prior to actuation is closed and shielded against the influence of pressure and temperature by means of a shiftable valve member (26) which is locked in its closed position by a rupture disc (31), which abuts against an extension of the valve member, said disc being situated in a housing (28) and retained against movement, and whereby at least one discharge passage (25) for discharge of gas to the piston housing (18) is situated outside of the housing.

2. A valve actuator as claimed in claim 1, wherein a freely movable sub piston (4) is provided coaxially with one end of the piston (3) in order to cause sealing against an outlet at one end of the piston chamber (8), and wherein the sub piston (4) comprises at least one axial protrusion (6) for maintaining a spacing between the piston and the sub piston, for admission of gas.

3. A valve actuator as claimed in claim 1 or claim 2, wherein the passages (12) are coupled to a dead volume (10) through rupture discs (13 ; 14)

4. A valve actuator as claimed in any one of claims 1 to 3, wherein at least one of the passages (12) is coupled to a gas discharge duct (17) provided with a labyrinth seal (16).

5. A valve actuator as claimed in any one of claims 1 to 4, wherein thermal insulation (32) covers a surface of the valve member (26) facing away from the charge chamber.

## Ansprüche

1. Ein Ventilbetätiger zum Steuern eines Ventils unter Verwendung eines Gases zur Bewegung des Ventils, wobei das Gas durch Verbrennung einer zu einem gewünschten Zeitpunkt zündbaren Ladung (19) erzeugt wird, **dadurch gekennzeichnet, daß** das zu steuernde Ventil mit einem Kolben (3) in einem Kolbengehäuse (18) verbunden ist, und Durchlässe (12) für das Gas die jeweiligen Enden einer Kolbenkammer (8) mit wenigstens einem Gasgenerator (1, 2) verbinden, wobei jeder Gasgenerator (1, 2) eine Ladungskammer hat, die vor Betätigung geschlossen und gegen den Einfluß von Druck und Temperatur durch ein verschiebliches Ventilglied (26) abgeschirmt ist, das seinerseits in seiner Schließstellung durch eine Brechscheibe (31) verriegelt ist, die sich ihrerseits an einer Verlängerung des Ventilgliedes abstützt, wobei diese Scheibe in einem Gehäuse (28) gelegen und gegen Bewegung zurückgehalten ist, und daß wenigstens ein Entladungsdurchlaß (25) zur Entladung von Gas in das Kolbengehäuse (18) außerhalb des Gehäuses angeordnet ist.

2. Ein Ventilbetätiger nach Anspruch 1, bei dem ein frei beweglicher Nebenkolben (4) koaxial mit dem einen Ende des Kolbens (3) vorgesehen ist, um eine Abdichtung gegen einen Auslaß an einem Ende der Kolbenkammer (8) zu bewirken, und bei dem der Nebenkolben (4) wenigstens einen axialen Vorsprung (6) zum Aufrechterhalten eines Abstandes zwischen dem Kolben und dem Nebenkolben zum Eintritt von Gas umfaßt.

3. Ein Ventilbetätiger nach Anspruch 1 oder 2, bei dem die Durchlässe (12) über Brechscheiben (13, 14) mit einem toten Volumen (10) verbunden sind.

4. Ein Ventilbetätiger nach einem der Ansprüche 1-3, bei dem wenigstens einer der Durchlässe (12) an eine mit einer Labyrinthdichtung (16) versehene Gasentladungsleitung (17) angeschlossen ist.

5. Ein Ventilbetätiger nach einem der Ansprüche 1-4, bei dem eine thermische Isolation (32) eine fläche des Ventilgliedes (26) bedeckt, die von der Entladungskammer weg gerichtet ist.

## Revendications

1. Actionneur de vanne pour commander une vanne en utilisant un gaz pour déplacer la vanne, ce gaz étant produit par la combustion d'une charge (19) qui peut être provoquée à un instant désiré, caractérisé en ce que la vanne à commander est reliée à un piston (3) dans un cylindre (18), et en ce que des passages (12) pour le gaz relient les extrémités respectives d'une chambre (8) du cylindre à au moins un générateur de gaz (1, 2), chaque générateur de gaz (1, 2) comprenant une chambre de charge qui, avant actionnement, est fermée et blindée à l'encontre de l'influence de la pression et de la température au moyen d'un élément de vanne coulissant (26) qui est verrouillé dans sa position fermée par une plaque de rupture (31) qui bute contre un prolongement de l'élément de vanne, cette plaque étant située dans un logement (28) et maintenue à l'encontre d'un déplacement, et d'où il résulte qu'au moins un passage d'évacuation (25) pour l'évacuation des gaz vers le cylindre (18) est situé à l'extérieur du cylindre.

2. Actionneur de vanne selon la revendication 1, dans lequel un piston secondaire (4) librement mobile est prévu coaxialement avec une extrémité du piston (3) de façon à provoquer une étanchéité à l'encontre d'une sortie à une extrémité de la chambre (8) du cylindre et dans lequel le piston secondaire (4) comprend au moins une partie en saillie axiale (6) pour maintenir un écart entre le piston et le piston secondaire pour l'admission de gaz.

3. Actionneur de vanne selon la revendication 1 ou la revendication 2, dans lequel les passages (12) sont couplés à un volume mort (10) par l'intermédiaire de disques de sécurité (13, 14).

4. Actionneur de vanne selon l'une quelconque des revendications 1 à 3, dans lequel au moins un des passages (12) est couplé à une conduite d'évacuation de gaz (17) munie d'un passage à labyrinthe (16).

5. Actionneur de vanne selon l'une quelconque des revendications 1 à 4, dans lequel une isolation thermique (32) couvre une surface de l'élément de vanne (26) du côté extérieur à la chambre de charge.

Fig. 1

EP 0 232 285 B1

Fig. 3

Fig. 2

EP 0 232 285 B1

Fig. 4

EP 0 232 285 B1